# EUROPEAN PATENT APPLICATION

(11) **EP 2 445 198 A1**
(43) Date of publication of application: **25.04.2012**
(21) Application number: 10789133.5
(22) Date of filing: 16.03.2010
(51) Int. Cl.: H04N 5/335, H04N 5/243

(54) **IMAGE PICKUP APPARATUS**

(30) Priority: 15.06.2009 JP 2009142091
(71) Applicant: Konica Minolta Opto, Inc., Hachioji-shi, Tokyo 192-8505 (JP)
(72) Inventor: KATAGIRI, Tetsuya, Hino-shi Tokyo 191-8511 (JP); KAMON, Koichi, Hino-shi Tokyo 191-8511 (JP)
(74) Representative: HOFFMANN EITLE
(86) International application number: PCT/JP2010/001851
(87) International publication number: WO 2010/146748

(57) **Abstract**

An inflection point variation correction unit 641 executes a predetermined characteristic conversion processing on pixel data read by each pixel, so as to unify the photoelectric conversion characteristic of each pixel data into a linear characteristic. When the flexure start level S of a target pixel, which is one of a plurality of pixels, is greater than a predetermined inflection point threshold, and when, at the same time, the pixel value d of the pixel data read by the target pixel is greater than a predetermined pixel threshold, then an inflection point interpolation unit 642 outputs not a pixel value d' obtained by the above mentioned characteristic conversion processing, but a pixel value d" obtained by an interpolation processing using a pixel data read by a neighbor pixel located near the target pixel, whereby the photoelectric conversion characteristic of the pixel data read by the target pixel is converted into the linear characteristic.

## Description

### Technical Field

The present invention relates to an image pickup apparatus comprising an imaging element constituted by a plurality in pixels of which photoelectric conversion characteristic changes at an inflection point.

### Background Art

Recently an imaging element constituted by a plurality of pixels of which photoelectric conversion characteristic changes at an inflection point, which is used for expanding the dynamic range, is known. Some of these types of imaging elements have a linear photoelectric conversion characteristic (hereafter called "linear characteristic") on the lower brightness side of the inflection point, and a logarithmic photoelectric conversion characteristic (hereafter called "log characteristic") on the higher brightness side of the inflection point. The photoelectric conversion characteristic that consists of the linear characteristic and the log characteristic is called a "linear log characteristic".

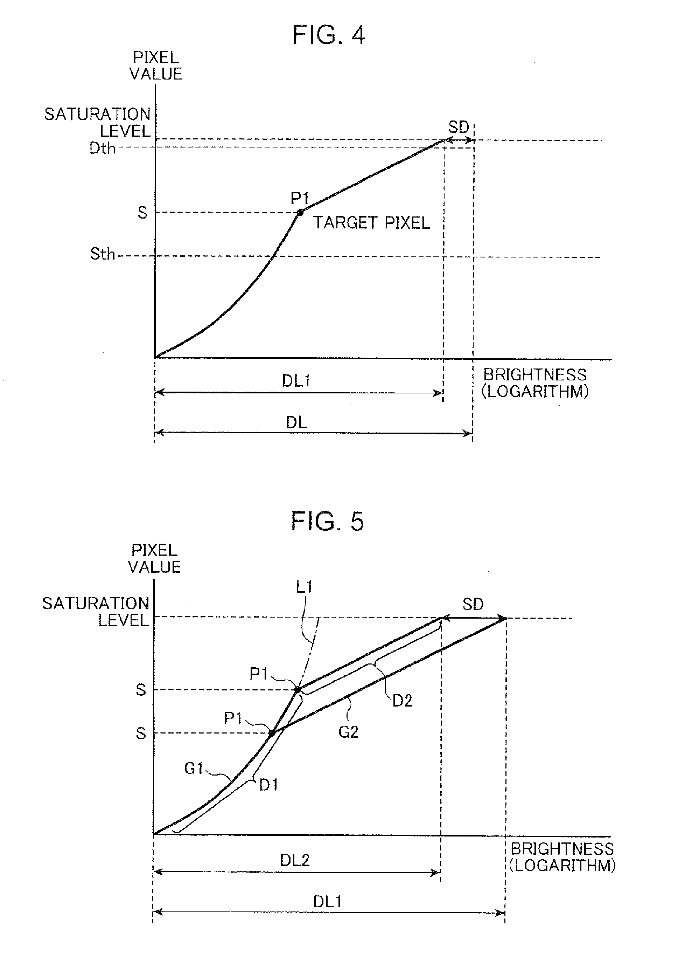

Fig. 5 is a graph depicting the linear log characteristic, where the ordinate indicates a pixel value, and the abscissa indicates brightness in a logarithm format. In Fig. 5, a photoelectric conversion characteristic of a pixel PX1 is indicated by the graph G1, and a photoelectric conversion characteristic of another pixel PX2 is indicated by the graph G2.

In the graph G1 in Fig. 5, D1 indicates a linear area having a linear characteristic, and D2 indicates a log area having a log characteristic. Then an image processing circuit disposed on the output side of the imaging element performs processing on the pixel data read by the pixels having the linear log characteristic, as preprocessing to perform various image processings, so that the photoelectric conversion characteristic is unified into a linear characteristic or log characteristic.

In the case of unifying the photoelectric conversion characteristic into the linear characteristic, for example, various image processings are performed on the pixel data belonging to the linear area D 1 shown in Fig. 5, without changing the values thereof, and various image processings are performed on the pixel data belonging to the log area D2, using values converted into the linear characteristic.

In the linear log characteristic, the inflection point P1, which is a start level of the log area D2, normally varies depending on the pixel.

In the case of determining a dynamic range of an imaging element, as shown in Fig. 5, if the dynamic range DL1 is set based on the pixel PX2, in which the pixel value of the inflection point P1 is low, then many saturated areas SD would be generated on the higher brightness side in the photoelectric conversion characteristic of the pixel PX1 in which the pixel value of the inflection point P1 is high. Therefore the dynamic range of the imaging element is determined based on a pixel in which the pixel value of the inflection point P1 is high.

However in the case of determining a dynamic range based on a pixel in which the pixel value of the inflection point P1 is high, the dynamic range of the entire imaging element drops if variance of the inflection point P1 is high, which is a problem.

For example as Fig. 5 shows, the range of the dynamic range DL2, which is set based on the pixel PX1 in which the pixel value of the inflection point P1 is high, is much narrower than the range of the dynamic range DL1, which is set based on the pixel PX2 in which the pixel value of the inflection point is low.

Therefore in order to expand the dynamic range, the dynamic range is conventionally set based on the pixel PXn in which the pixel value of the inflection point P1 is relatively high, and a pixel in which the pixel value of the inflection point P1 is higher than that in the pixel PXn is handled as a defective pixel. Patent Document 1, for example, is available as a document disclosing a prior art related to the present application.

In the prior art however, a pixel, in which a pixel value of the inflection point is high, is regarded as a defective pixel, for which interpolation processing is performed using adjacent pixels in all cases, without considering the specifics of the pixel value. This drops resolution of the images picked up by the imaging element, which is a problem. Furthermore, if a pixel, in which the pixel value of the inflection point P1 is low, is used as the pixel PXn in order to expand the dynamic range, a number of defective pixels increases and a number of pixels to be interpolated increases, which further decreases resolution.

Patent Document 1: Japanese Patent Application Laid-Open No. 2007-251898

### Summary of the Invention

It is an object of the present invention to provide an image pickup apparatus which can suppress a drop in resolution and still expand dynamic range.

An aspect of the present invention is an image pickup apparatus having: an imaging element having a plurality of pixels of which photoelectric conversion characteristic changes at an inflection point; and a characteristic conversion unit which converts a photoelectric conversion characteristic of each pixel data into a predetermined reference photoelectric conversion characteristic by executing a predetermined characteristic conversion processing on pixel data read by each pixel, the image pickup apparatus being **characterized in that** when a pixel value of an inflection point of a target pixel, which is one of the plurality of pixels, is greater than a predetermined inflection point threshold, and when, at the same time, the pixel value of the pixel data read by the target pixel is greater than a predetermined pixel threshold, then the characteristic conversion unit performs interpolation processing using pixel data read by neighbor pixels located near the target pixel, in place of performing the characteristic conversion processing, so as to convert the photoelectric conversion characteristic of the pixel data read by the target pixel into the reference photoelectric conversion characteristic, and when the pixel value of the inflection point of the target pixel is the inflection point threshold or less, or when the pixel value of the pixel data read by the target pixel is the pixel threshold or less, then the characteristic conversion unit outputs without modification the pixel value of the target pixel on which the characteristic conversion processing has been executed, so as to convert the photoelectric conversion characteristic of the pixel data read by the target pixel into the reference photoelectric conversion characteristic.

### Brief Description of the Drawings

[Fig. 1] Fig. 1 is a block diagram depicting an image pickup apparatus according to Embodiment 1 of the present invention.
[Fig. 2] Fig. 2 is a block diagram depicting a detailed configuration of the image processing unit shown in Fig. 1.
[Fig. 3] Fig. 3 is a schematic diagram depicting an example of a data structure of a lookup table.
[Fig. 4] Fig. 4 is a graph depicting a photoelectric conversion characteristic of a pixel in which the pixel value of the inflection point exceeds the inflection point threshold.
[Fig. 5] Fig. 5 is a graph depicting a linear log characteristic.

### Best Mode for Carrying Out the Invention

### (Embodiment 1)

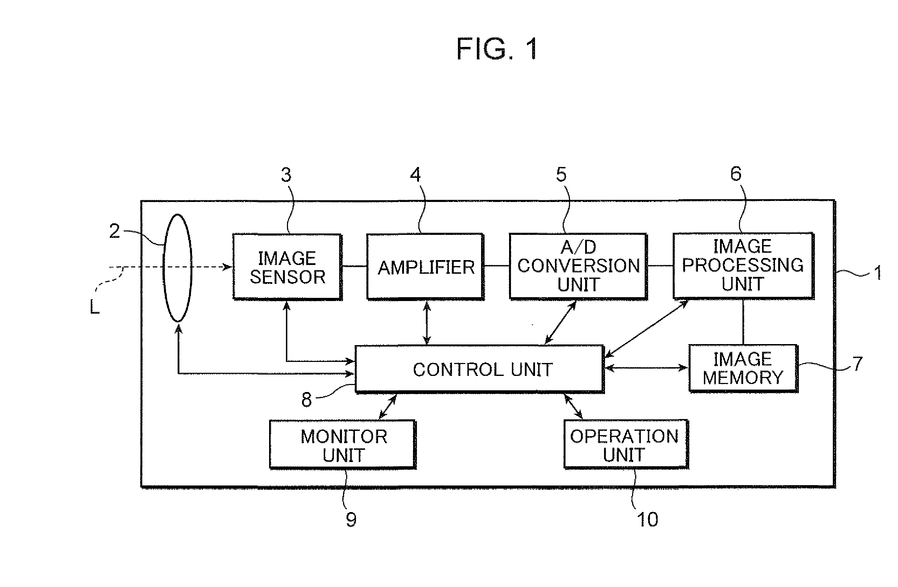

Fig. 1 is a block diagram depicting an image pickup apparatus according to Embodiment 1 of the present invention. As Fig. 1 shows, the image pickup apparatus is constituted by a digital camera, comprising a lens unit 2, an image sensor 3 (an example of an imaging element), an amplifier 4, an A/D conversion unit 5, an image processing unit 6, an image memory 7, a control unit 8, a monitor unit 9 and an operation unit 10.

The lens unit 2 is constituted by an optical lens system which receives an optical image of an object, and guides the image to the image sensor 3. For the optical lens system, a zoom lens, a focus lens, and other fixed lens blocks, for example, which are disposed in series along the optical axis L of the optical image of the object, can be used. The lens unit 2 includes a diaphragm (not illustrated) for adjusting the transmitted light quantity, and a shutter (not illustrated), and driving of the diaphragm and shutter is controlled by the control unit 8.

The image sensor 3 has a plurality of pixels which are arranged in a matrix of a predetermined number of rows x a predetermined number of columns, and of which photoelectric conversion characteristic changes at an inflection point, performs photoelectric conversion on the optical image formed by the lens unit 2, generates image data constituted by pixel values of each R (red), G (green) and B (blue) color component having a level according to the light quantity, and outputs the image data to the amplifier 4.

For the image sensor 3, a CMOS image sensor, a threshold VMIS (Voltage Modulation Image Sensor) or a CCD image sensor, for example, may be used. In the present embodiment, an image sensor on which pixels of each color component are arranged in an RGB Bayer array, for example, is used for the image sensor 3. In other words, the image sensor 3 is an image sensor on which a plurality of types of pixels, for reading pixel data on different color components, are cyclically arrayed in a predetermined pattern.

This is only an example, and an image sensor 3 for picking up a monochrome image may be used instead. In the present embodiment, it is assumed that the array direction of the pixels in each row is the horizontal direction, and the array direction of the pixels in each column is the vertical direction. The image sensor 3 sequentially outputs the pixel data read by each pixel in the manner of a raster scan from the pixel in the upper left corner to the pixel in the lower right corner.

According to the present embodiment, the photoelectric conversion characteristic of each pixel is the linear characteristic on the lower brightness side, and the log characteristic on the higher brightness side, as shown in Fig. 5. The change point between the linear characteristic and log characteristic is an inflection point P1, as shown in Fig. 5. The pixel value of the inflection point P1 is called the "flexure start level S".

The amplifier 4 includes an AGC (Auto Gain Control) circuit and a CDS (Correlated Double Sampling) circuit, for example, and amplifies the image data that is output from the image sensor 3. The A/D conversion unit 5 converts the image data of each R, G and B color amplified by the amplifier 4 into digital image data of each R, G and B color. According to the present embodiment, the pixel data received by each pixel of the image sensor 3 is converted into image data having 12-bit gradation values.

The image processing unit 6 executes the later mentioned image processing. The image memory 7 is constituted by a RAM (Random Access Memory), and stores image data processed by the image processing unit 6.

The control unit 8 is constituted by a ROM for storing various control programs, a RAM for temporarily storing data, a control processing unit (CPU) which reads the control programs from ROM and executes them, for example, and controls operation of the entire image pickup apparatus.

For the monitor unit 9, a color liquid crystal display is installed on the rear face of the housing of the image pickup apparatus, for example, and displays an image picked up by the image sensor 3 or an image stored in the image memory 7, on the monitor.

The operation unit 10 includes various operation switches, such as a power switch, a release switch, a mode setting switch for setting various imaging modes, and a menu selection switch. If the release switch is pressed, a series of imaging operations are executed. In other words, an object is imaged by the image sensor 3, a predetermined image processing is performed on the image data obtained by this imaging operation, and the image data is recorded in the image memory 7. In stead of storing the image data in the image memory 7, the series of imaging operations may be ended with outputting the image data from the image processing unit 6 as digital signals, or converting the digital signals into analog signals and outputting the image data as such analog signals as NTSC.

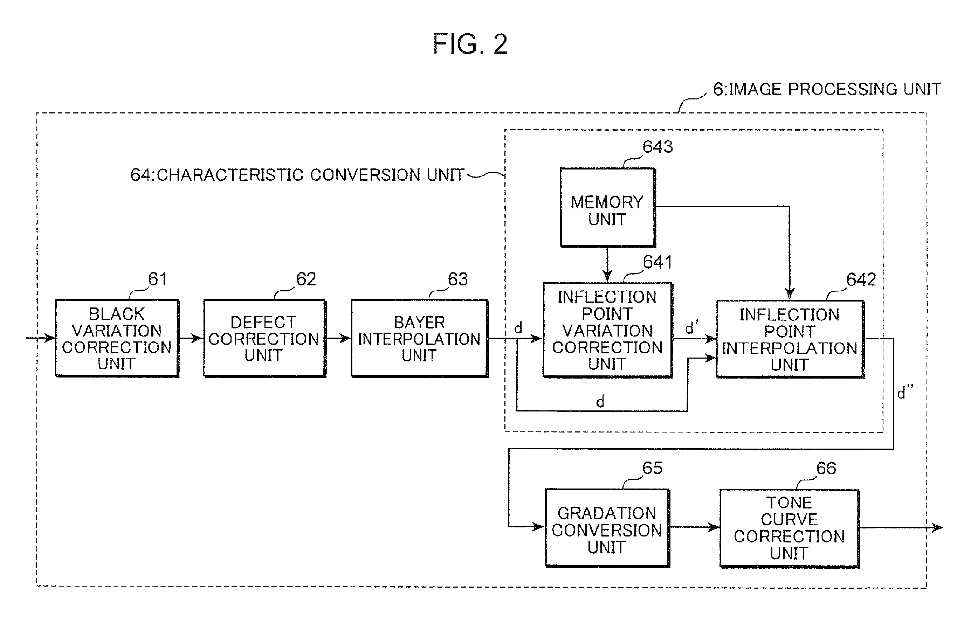

Fig. 2 is a block diagram depicting a detailed configuration of the image processing unit 6 shown in Fig. 1. The image processing unit 6 has a black variation correction unit 61, a defect correction unit 62, a Bayer interpolation unit 63, a characteristic conversion unit 64, a gradation conversion unit 65 and a tone curve correction unit 66.

The black variation correction unit 61 corrects the variations of the black level of each pixel constituting the image sensor 3. The defect correction unit 62 performs interpolation, processing, that is, interpolating pixel data read by a defective pixel which can output only a pixel value not greater than a predetermined standard value, using the pixel values of peripheral pixels. Here linear interpolation or spline interpolation can be used for the interpolation processing.

The Bayer interpolation unit 63 executes Bayer interpolation, which is an interpolation processing for interpolating the omitted pixels in each color component, which are generated because each pixel constituting the image sensor 3 is arranged in a Bayer array. Because of this interpolation, image data on one image is represented by three image datum corresponding to three color components: R, G and B. If the image sensor 3 is a monochrome image sensor, the Bayer interpolation unit 63 is unnecessary.

The characteristic conversion unit 64 has an inflection point variation correction unit 641, an inflection point interpolation unit 642 and a memory unit 643, and converts the photoelectric conversion characteristic of each pixel data into a predetermined reference photoelectric conversion characteristic. Since three image datum corresponding to the color components R, G and B are output from the Bayer interpolation unit 63, the characteristic conversion unit 64 executes the following processing for each of the three image datum corresponding to each color component.

In the present embodiment, the characteristic conversion unit 64 uses the linear characteristic as the reference photoelectric conversion characteristic, and converts the log characteristic into the linear characteristic, so as to unify the photoelectric conversion characteristic.

The inflection point variation correction unit 641 executes a predetermined characteristic conversion processing on the pixel data read by each pixel, so as to unify the photoelectric conversion characteristic of each pixel data into the linear characteristic.

The inflection point variation correction unit 641 compares the pixel value d of the pixel data read by each pixel with the value of the flexure start level S which is predetermined for each pixel, whereby it is determined whether the pixel data is the pixel data having the linear characteristic or the pixel data having the log characteristic, and if it is the pixel data having the linear characteristic, the pixel value d is directly output as the pixel value d', and if it is the pixel data having the log characteristic, the characteristic conversion processing is executed on the pixel value d, and the obtained pixel value d' is output.

In concrete terms, if the pixel value d of the pixel data which is output from the Bayer interpolation unit 63 is d < S, the inflection point variation correction unit 641 determines that this pixel data is pixel data having the linear characteristic, and if S ≤ d, the inflection point variation correction unit 641 determines that this pixel data is pixel data having the log characteristic.

Here the inflection point variation correction unit 641 can convert the pixel data having the log characteristic into the pixel data having the linear characteristic using a lookup table T, of which correspondence in the case of converting a pixel value in the log area D2 into a pixel value having the linear characteristic is predetermined.

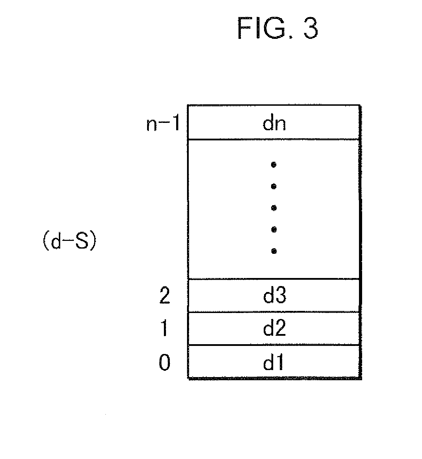

In this case, the lookup table T is a lookup table commonly used for all pixels. Fig. 3 is a schematic diagram depicting an example of the data structure of the lookup table T.

As Fig. 3 shows, the lookup table T is constituted by n (n is an integer) number of cells to which an address "0" to "n-1 is assigned respectively. Each address corresponds to the relative value of the pixel value d with respect to the flexure start level S, that is, d-S. In each cell, a value d1 to dn, after converting the value, generated by subtracting the flexure start level S from the pixel value d in the log area D2, into a value having the linear characteristic, is stored.

In other words, a value generated by converting each pixel value d, belonging to the log area D2 in Fig. 5 into a value on a prolonged line L1 of the linear area D1, is stored in the lookup table T.

Therefore if the input pixel data is pixel data having the log characteristic, the inflection point variation correction unit 641 outputs a value of the lookup table T stored in the address d-S, that is, a value generated by subtracting the flexure start level S from the pixel value d of this pixel data, so as to convert the log characteristic into the linear characteristic.

Each address of the lookup table T corresponds to d-S because the variation of the flexure start level S of each pixel is considered. In other words, in the present embodiment, the photoelectric conversion characteristic of the log area D2 of each pixel is based on the assumption that the flexure start level S varies but the waveform is approximately the same. Therefore the lookup table T can be applied to all the pixels if each address of the lookup table T corresponds not to d but to d-S.

In the inflection point variation correction unit 641, the pixel data constituting one image data is input in the predetermined sequence, therefore the pixel which read the input pixel data can be specified based on this sequence, whereby the flexure start level S, which is predetermined for each pixel, can be specified.

Referring back to Fig. 2, if the flexure start level S of a target pixel, which is one of a plurality of pixels, is greater than a predetermined inflection point threshold, and if, at the same time, the pixel value d of the pixel data read by the target pixel is greater than a predetermined pixel threshold, then the inflection point interpolation unit 642 outputs the pixel value d" obtained by interpolating the pixel data read by the neighbor pixels located near the target pixel, instead of the pixel value d' obtained by the above mentioned characteristic conversion processing, so as to convert the photoelectric conversion characteristic of the pixel data read by the target pixel into the linear characteristic.

If the flexure start level S of the target pixel is the inflection point threshold or less, or if the pixel value d of the pixel data read by the target pixel is the predetermined threshold or less, then the inflection point interpolation unit 642 directly outputs the pixel value d', on which characteristic conversion processing was executed by the inflection point variation correction unit 641, as the pixel value d".

In concrete terms, the processing by the inflection point interpolation unit 642 is expressed by the following algorithm, where d(x, y) is a pixel value of the pixel data read by the target pixel, d'(x, y) is a pixel value of the pixel data on which characteristic conversion processing was executed by the inflection point variation correction unit 641, Sth is an inflection point threshold of the target pixel, and Dth is a pixel threshold of the target pixel.

```
 if (S > Sth&d(x,y) > Dth)
 d"(x,y) = ((d'(x-1,y)+d'(x+1,y)+d'(x,y-1)+d'(x,y+ 1))/4
 else
 d"(x,y) = d'(x,y)
```

In the above example, the inflection point interpolation unit 642 specifies four pixels adjacent to the target pixel in the horizontal and vertical directions as the neighbor pixels. An average value of these four neighbor pixels is output as d".

The inflection point interpolation unit 642 may specify two pixels adjacent to the target pixel in the horizontal direction as neighbor pixels, and output an average value of the two neighbor pixels as d".

In this case, the processing of the inflection point interpolation unit 642 is expressed by the following algorithm.

```
 if (S > Sth&d(x,y) > Dth)
 d"(x,y) = ((d'(x-1,y)+d'(x+ 1,y))/2
 else
 d"(x,y) = d'(x,y)
```

In Fig. 2, the Bayer interpolation unit 63 is disposed in a previous stage of the characteristic conversion unit 64, but may be disposed in a subsequent stage of the characteristic conversion unit 64, specifically between the tone conversion unit 65 and the tone curve correction unit 66.

In this case, one image data before executing Bayer interpolation is input to the characteristic conversion unit 64. Therefore the processing of the inflection point interpolation unit 642 is expressed by the following algorithm.

```
 if (S > Sth&d(x,y) > Dth)
 drb"(x,y) = ((drb'(x-2,y)+drb'(x+2,y)+drb'(x,y-2)+drb'(x,y+2))/4
 dg"(x,y) = ((dg'(x-1,y-1)+dg'(x+1,y-1)+dg'(x-1,y+1)+dg(x+1,y+1))/4
 else
 drb"(x,y) = drb'(x,y)
 dg"(x,y) = dg'(x,y)
```

Where drb is a pixel value of the pixel data read by the pixel, a red or blue filter is installed (R pixel or B pixel) in the Bayer array, and dg is a pixel value of the pixel data read by the pixel where a green filter is installed (G pixel).

In this case, the inflection point interpolation unit 642 is a pixel where a filter having a same color as the target pixel is installed, and four pixels located near the target pixel are specified as the neighbor pixels, and an average value of these four pixels is output as d".

Specifically, if the target pixel is an R pixel, four pixels - two R pixels located near this R pixel in the horizontal direction and two R pixels located near this R pixel in the vertical direction - are specified as the neighbor pixels. If the target pixel is a B pixel, the neighbor pixels are specified in the same manner as the case of the R pixel.

If the target pixel is a G pixel, four G pixels adjacent to this G pixel in the upper right, lower right, upper left and lower left directions are specified as neighbor pixels.

Specifying four neighbor pixels is one example, and two pixels, which have a same color filter as the target pixel, and are adjacent to the target pixel in the horizontal direction, may be specified as neighbor pixels.

The memory unit 643 is constituted by a non-volatile recording media, such as EEPROM, and stores a flexure start level S, which is predetermined for each pixel. The memory unit 643 stores the inflection point threshold Sth, the pixel threshold Dth and the lookup table T. Here the inflection start level S is a value unique to each pixel, and the inflection point threshold Sth and the pixel threshold Dth are values common to all the pixels.

Fig. 4 is a graph depicting a photoelectric conversion characteristic of a pixel in which the pixel value of the inflection point P1 exceeds the inflection point threshold Sth, that is, a pixel in which the pixel value of the inflection point P1 is extremely high, and the ordinate indicates a pixel value, and the abscissa indicates brightness.

In the case when the dynamic range DL of the image sensor 3 is set as shown in Fig. 4 in the present embodiment, a large saturated area SD is generated on the high brightness side of a pixel, if the pixel value of the inflection point P1 is extremely high.

It is not desirable to convert this pixel data into pixel data having a linear characteristic by the characteristic conversion processing, since the image reproducibility of the pixel data, in which the pixel value d is near the saturation level, is not high.

Therefore according to the present embodiment, if the pixel value d of the pixel data, read by a pixel in which the flexure start level S is greater than the inflection point threshold Sth, is greater than the pixel threshold Dth, then the inflection point interpolation unit 642 performs the above mentioned interpolation processing, and not the characteristic conversion processing. Thereby the dynamic range of a pixel in which the pixel value of the inflection point P1 is extremely high can be expanded from DL1 to DL.

If the pixel value d of the pixel data read by a pixel, in which the pixel value of the inflection point P1 is extremely high, is the pixel threshold Dth or less, on the other hand, this pixel data has been converted to have a linear characteristic not by interpolation processing, but by characteristic conversion processing. Thereby a drop in resolution is prevented.

Here a saturation level, which is the maximum pixel value to specify the dynamic range DL, may be used as the pixel threshold Dth, but using a value slightly lower than the saturation level is preferable, since image reproducibility of the pixel data near the saturation level is not high.

For the inflection point threshold Sth, an average value of the flexure start level S of all the pixels constituting the image sensor 3 may be used, or a value at which the flexure start level S of a high % (e.g. 10%) pixels of the distribution of the flexure start level S of all the pixels exceeds the inflection point threshold Sth may be used.

Referring back to Fig. 2, the gradation conversion unit 65 performs histogram equalization processing, and dynamic range compression processing among others on the pixel data which is output from the characteristic conversion unit 64. The histogram equalization processing is a processing for uniformly distributing the gray levels in an image. By this processing, contrast of an image becomes clearer. For the dynamic range compression processing, a technology disclosed in Masami Ogata, "Dynamic Range Compression Technology of an Image," Image Laboratory (Japan Industrial Publishing Co. Ltd.) (June 2004), for example, can be used.

The tone curve correction unit 66 performs gamma correction on the image data which is output from the gradation conversion unit 65. The image data which is output from the tone curve correction unit 66 is stored in the image memory 7 shown in Fig. 1.

Now operation of the image pickup apparatus according to the present embodiment will be described. When the operation unit 10 receives an imaging instruction from the user, the image data picked up by the image sensor 3 is amplified to a predetermined level by the amplifier 4, is A/D-converted by the A/D conversion unit 5, and is then input to the image processing unit 6.

On the image data which is input to the image processing unit 6, the black level is corrected by the black variation correction unit 61, defective pixels are interpolated by the defect correction unit 62, Bayer interpolation is performed by the Bayer interpolation unit 63, and then resultant pixel data is input to the inflection point variation correction unit 641.

For the pixel data which is input to the inflection point variation correction unit 641, the photoelectric conversion characteristic is converted into the linear characteristic, and the resultant pixel data is input to the inflection point interpolation unit 642.

If a pixel value d of a target pixel, which is the pixel data output from the Bayer interpolation unit 63, and the flexure start level S of the target pixel satisfy both conditions of flexure start level S > inflection point threshold Sth and pixel value d > pixel threshold Dth, then the inflection point interpolation unit 642 executes the above mentioned interpolation processing using the pixel value d' of the neighbor pixels, which is output from the inflection point variation correction unit 641, calculates the pixel value d", and outputs the pixel value d" to the gradation conversion unit 65.

If a pixel value d of the target pixel, which is the pixel data output from the Bayer interpolation unit 63, and the flexure start level S of the target pixel satisfy either condition of flexure start level S ≤ inflection point threshold Sth or pixel value d ≤ pixel threshold Dth, on the other hand, then the inflection point interpolation unit 642 directly outputs the pixel value d' of the target pixel, which is output from the inflection point variation correction unit 641 to the gradation conversion unit 65 as the pixel value d".

On the pixel data processed by the inflection point interpolation unit 642, histogram equalization processing and dynamic range compression processing among others are preformed by the gradation conversion unit 65, and gamma correction is performed by the tone curve correction unit 66, and the resultant is stored in the image memory 7.

According to the image pickup apparatus of the present embodiment, if the pixel value of the inflection point P1 of the target pixel is greater than the inflection point threshold Sth, and if at the same time the pixel data read by the target pixel is greater than the pixel threshold Dth, the characteristic of the pixel data read by the target pixel is converted into the linear characteristic by the interpolation processing using the pixel data read by the neighbor pixels.

Thereby if a pixel data is read by a pixel of which dynamic range is narrow because the pixel value of the inflection point is high, and the pixel data at the same time has a large pixel value, then the interpolation processing is executed using the pixel data read by the neighbor pixels, instead of the characteristic conversion processing being executed.

Since there are not many pixels in which the pixel value of the inflection point is extremely high, it is rare that the pixel value of the inflection point of a neighbor pixel becomes extremely high, and the dynamic range of the neighbor pixel is more likely to be wider than the dynamic range of the target pixel. The pixel data in which the pixel value is close to the saturation level does not accurately reproduce an image, hence it is not preferable to perform the characteristic conversion processing directly on this pixel data.

Therefore if the above mentioned interpolation processing is performed in the case when the target pixel is a pixel of which dynamic range is narrow because the pixel value of the inflection point is high, and the pixel data read by the target pixel is in a saturated area or in an area near a saturated area, the dynamic range of the target pixel can be expanded.

On the other hand, even if the pixel data is read by a pixel in which the pixel value of the inflection point is extremely high and the dynamic range is narrow, the pixel data is converted into the pixel data having a linear characteristic, not by the interpolation processing but by the characteristic conversion processing if the pixel value is small. In other words, even if the image data is read by a pixel in which the pixel value of the inflection point is extremely high, the photoelectric conversion characteristic may be converted by the regular characteristic conversion processing if the pixel value is lower than the saturation level.

Therefore, compared with the case of handling a pixel in which the pixel value of the inflection point is extremely high as a defective pixel and executing interpolation processing indiscriminately, regardless the pixel value, a drop in resolution can be prevented.

### (Embodiment 2)

An image pickup apparatus according to Embodiment 2 of the present invention will now be described. The image pickup apparatus of the present embodiment is **characterized in that** the interpolation processing is performed using pixels suitable for the interpolation processing, out of the neighbor pixels in Embodiment 1.

In the present embodiment, description on composing elements the same as Embodiment 1 is omitted. The configuration, which is the same as Embodiment 1, will be described with reference to Fig. 1 and Fig. 2.

According to the present embodiment, the inflection point interpolation unit 642 shown in Fig. 2 does not use the pixel data read by a neighbor pixel in which the pixel value is greater than a pixel threshold Dth, and the flexure start level S is greater than the inflection point threshold Sth, for the interpolation processing.

In concrete terms, the inflection point interpolation unit 642 performs the following processing. The following processing shows an algorithm in the case when two pixels adjacent to the target pixel in the horizontal direction are the neighbor pixels.
1: if (S(x,y) > Sth&d(x,y) > Dth){
2: if (S(x-1,y) ≤ Sth&d(x-1,y) ≤ Dth{
3: if (S(x+1,y) ≤ Sth&d(x+1,y) ≤ Dth
4: d"(x,y) = (d'(x-1,y)+d'(x+1,y))/2
5: else
6: d"(x,y) = d'(x-1,y)
7: }else{
8: if (S(x+1,y) ≤ Sth&d(x+1,y) ≤ Dth)
9: d"(x,y) = ((d'(x+1,y)
10: }
11:}else
12: d"(x,y) = d'(x,y)
The first line of the algorithm shows that the flexure start level S of the target pixel is greater than the inflection point threshold Sth, and at the same time, the pixel value d is greater than the pixel threshold Dth.

The second line of the algorithm shows that the flexure start level S of the neighbor pixel on the left side is the inflection point threshold Sth or less, and at the same time, the pixel value d is the pixel threshold Dth or less.

The third line of the algorithm shows that the flexure start level S of the neighbor pixel on the right side is the inflection point threshold Sth or less, and at the same time, the pixel value d is the pixel threshold Dth or less.

The fourth line of the algorithm shows that if all the conditions in the first to third lines of the algorithm are satisfied, interpolation processing is performed using the pixel data of the neighbor pixel on the right side, and the neighbor pixel on the left side on which the characteristic conversion processing was performed by the inflection point variation correction unit 641.

The sixth line of the algorithm shows that if the flexure start level S is the inflection point threshold Sth or less, and if, at the same time, the pixel value d is the pixel threshold Dth or less only in the neighbor pixel on the left side, the interpolation processing is performed using only the pixel data of the neighbor pixel on the left side on which the characteristic conversion processing was performed by the inflection point variation correction unit 641.

The eighth line of the algorithm shows that if the flexure start level S is the inflection point threshold Sth or less, and if, at the same time, the pixel value d is the pixel threshold Dth or less only in the neighbor pixel on the right side, the interpolation processing is performed using only the pixel data of the neighbor pixel on the right side on which the characteristic conversion processing was performed by the inflection point variation correction unit 641.

The twelfth line of the algorithm shows that if the condition in the first line of the algorithm is not satisfied, in other words, if the flexure start level S of the target pixel is the inflection point threshold Sth or less, or if the pixel value d of the target pixel is the pixel threshold Dth or less, the pixel data of the target pixel on which the characteristic conversion processing was performed by the inflection point variation correction unit 641 is directly output.

In the above description, two pixels adjacent to the target pixel in the horizontal direction are specified as the neighbor pixels, but the present invention is not limited to this, and may be applied to the case of specifying two pixels adjacent to the target pixel in the horizontal direction, and two pixels adjacent to the target pixel in the vertical direction, a total of four pixels, as the neighbor pixels.

In this case, the inflection point interpolation unit 642 performs the interpolation processing using pixel data, other than the pixel data read by pixels, out of the four neighbor pixels, in which the flexure start level S is greater than the inflection point threshold Sth, and at the same time, the pixel value d is greater than the pixel threshold Dth.

If the flexure start level S of the neighbor pixel on the left side is greater than the inflection point threshold Sth, and if, at the same time, the pixel value d is greater than the pixel threshold Dth, it may be determined whether the flexure start level S of the pixel on the left side is the inflection point threshold Sth or less, and at the same time, the pixel value d is the pixel threshold Dth or less, so that the interpolation processing is performed using this pixel as the neighbor pixel if this condition is satisfied.

If the flexure start level S of the neighbor pixel on the left side is greater than the inflection point threshold Sth, and if, at the same time, the pixel value d is greater than the pixel threshold Dth, a pixel with which the flexure start level S becomes the inflection point threshold Sth or less, and, at the same time, the pixel value d becomes the pixel threshold Dth or less may be sequentially searched toward the left, so that if a pixel which satisfies this condition exists in a search in a predetermined number of pixels, this pixel is used as the neighbor pixel. For the pixel on the right, the pixel above, the pixel below, the pixel on the upper left, the pixel on the upper right, the pixel on the lower left and the pixel on the lower right as well, the neighbor pixel can be searched in a same manner as the pixel on the left.

As described above, according to the image pickup apparatus of the present embodiment, if the target pixel is a pixel in which the pixel value of the inflection point P1 is extremely low, and if the interpolation processing is performed on the pixel data read by this target pixel, the neighbor pixel of which the inflection point is extremely low is not used for interpolation, therefore the interpolation processing can be performed accurately.

In Embodiment 1 and Embodiment 2, the characteristic conversion unit 64 converts the log characteristic into the linear characteristic, but the present invention is not limited to this, and the linear characteristic may be converted into the log characteristic.

In Embodiment 1 and Embodiment 2, the characteristic conversion unit 64 converts the log characteristic into the linear characteristic, but the present invention is not limited to this, and can also be applied to the case of converting the log characteristic, the transit characteristic of the linear characteristic and the log characteristic into the linear characteristic.

In this case, the inflection point between the linear characteristic and the transit characteristic may be used as the inflection point P1, or the inflection point between the transit characteristic and the log characteristic may be used as the inflection point P1. The characteristic conversion unit 64 may convert the linear characteristic and the transit characteristic into the log characteristic.

The technical characteristics of the image pickup apparatus can be summarized as follows.

(1) The image pickup apparatus according to an aspect of the present invention comprises: an imaging element having a plurality of pixels of which photoelectric conversion characteristic changes at an inflection point; and a characteristic conversion unit which converts a photoelectric conversion characteristic of each pixel data into a predetermined reference photoelectric conversion characteristic by executing a predetermined characteristic conversion processing on pixel data read by each pixel, the image pickup apparatus being **characterized in that** when a pixel value of an inflection point of a target pixel, which is one of the plurality of pixels, is greater than a predetermined inflection point threshold, and when, at the same time, the pixel value of the pixel data read by the target pixel is greater than a predetermined pixel threshold, then the characteristic conversion unit performs interpolation processing using pixel data read by neighbor pixels located near the target pixel, in place of performing the characteristic conversion processing, so as to convert the photoelectric conversion characteristic of the pixel data read by the target pixel into the reference photoelectric conversion characteristic, and when the pixel value of the inflection point of the target pixel is the inflection point threshold or less, or when the pixel value of the pixel data read by the target pixel is the pixel threshold or less, then the characteristic conversion unit outputs without modification the pixel value of the target pixel on which the characteristic conversion processing has been executed, so as to convert the photoelectric conversion characteristic of the pixel data read by the target pixel into the reference photoelectric conversion characteristic.

According to this configuration, if the inflection point of a target pixel is greater than the inflection point threshold, and if, at the same time, the pixel data read by the target pixel is greater than the pixel threshold, then the photoelectric conversion characteristic of the pixel data read by the target pixel is converted into the reference photoelectric conversion characteristic by the interpolation processing using the pixel data read by the neighbor pixel.

Thereby if a pixel data is read by a pixel of which dynamic range is narrow because the pixel value of the inflection point is high, and the pixel data at the same time has a large pixel value, then the interpolation processing is executed using the pixel data read by the neighbor pixels, instead of the characteristic conversion processing being executed.

Since there are not many pixels, in which the pixel value of the inflection point is extremely high, it is rare that the pixel value of the inflection point of a neighbor pixel becomes extremely high, and the dynamic range of the neighbor pixel is more likely to be wider than the dynamic image of the target pixel. The pixel data in which the pixel value is close to the saturation level does not accurately reproduce an image, hence it is not preferable to perform the characteristic conversion processing directly on this image data.

Therefore if the above mentioned interpolation processing is performed in the case when the target pixel is a pixel of which dynamic range is narrow because the pixel value of the inflection point is high, and the pixel data read by the target pixel is in a saturated area or in an area near the saturated area, the dynamic range of the target pixel can be expanded.

On the other hand, even if the pixel data is read by a pixel in which the pixel value of the inflection point is extremely high, the photoelectric conversion characteristic can be converted by regular characteristic conversion processing without problem, if the pixel value is lower than the saturation level.

Therefore in the above configuration, even if the pixel data is read by a pixel in which the pixel value of the inflection point is greater than the inflection point threshold, the photoelectric characteristic of the pixel data is converted into the reference photoelectric conversion characteristic, not by the interpolation processing, but by the characteristic conversion processing, if the pixel value is smaller than the pixel threshold.

Since the pixel, in which the pixel value of the inflexion point is the inflection point threshold or less, has a wide dynamic range, the photoelectric conversion characteristic can be converted into the reference photoelectric conversion characteristic without problem, regardless the pixel value.

Hence in the above configuration, the photoelectric conversion characteristic of the pixel data read by a pixel, in which the pixel value of the inflexion point is the inflection point or less, is converted into the reference photoelectric conversion characteristic by the characteristic conversion processing.

Therefore, compared with the case of handling a pixel in which the pixel value of the inflection point is extremely high as defective pixels and executing interpolation processing indiscriminately, regardless the pixel value, a drop in resolution can be prevented.

(2) It is preferable that the characteristic conversion unit converts the pixel data read by the neighbor pixel into the reference photoelectric conversion characteristic using the characteristic conversion processing, and executes the interpolation processing on the pixel data read by the target pixel, by using the pixel data of the neighbor pixel after the conversion.

According to this configuration, interpolation processing is performed using the pixel data after the photoelectric conversion characteristic is converted into the reference photoelectric conversion characteristic.

(3) It is preferable that the characteristic conversion unit does not use, among the neighbor pixels, the pixel data read by a pixel, of which pixel value is greater than the pixel threshold and in which the inflection point is greater than the inflection point threshold, for the interpolation processing.

According to this configuration, if the target pixel is a pixel of which the inflection point is extremely high and the dynamic range is narrow, and if interpolation processing is performed on the pixel data read by the target pixel, the neighbor pixels having a photoelectric conversion characteristic similar to that of the target pixel are not used for the interpolation processing, hence the interpolation processing can be performed accurately.

(4) It is preferable that the characteristic conversion unit specifies the two pixels adjacent to the target pixel in a horizontal direction as the neighbor pixels.

According to this configuration, two pixels adjacent to the target pixel in the horizontal direction, that is, two pixels adjacent to the target pixel on the same row, are specified as the neighbor pixels, so a memory to store pixel data read by pixels on the other rows is unnecessary, and the interpolation processing can be executed without waiting for the pixel data being read by the pixels on the other rows, therefore the configuration of the apparatus is simplified.

(5) It is preferable that the characteristic conversion unit specifies two pixels adjacent to the target pixel in a horizontal direction, and two pixels adjacent to the target pixel in a vertical direction as the neighbor pixels.

According to this configuration, the interpolation processing is performed using four neighbor pixels, hence the interpolation processing can be executed accurately.

(6) It is preferable that a plurality of pixels for reading pixel data having different color components are cyclically arranged with a predetermined pattern in the imaging element, and the characteristic conversion unit specifies pixels which are the same type as the target pixel, and are located near target pixels, as the neighbor pixels.

According to this configuration, the interpolation processing can be executed using pixels, which read the pixel data having the same color as the target pixel, as the neighbor pixels.

## Claims

1. An image pickup apparatus comprising:
an imaging element having a plurality of pixels of which photoelectric conversion characteristic changes at an inflection point; and
a characteristic conversion unit which converts a photoelectric conversion characteristic of each pixel data into a predetermined reference photoelectric conversion characteristic by executing a predetermined characteristic conversion processing on pixel data read by each pixel, wherein
when a pixel value of an inflection point of a target pixel, which is one of the plurality of pixels, is greater than a predetermined inflection point threshold, and when, at the same time, the pixel value of the pixel data read by the target pixel is greater than a predetermined pixel threshold, then the characteristic conversion unit performs interpolation processing using pixel data read by neighbor pixels located near the target pixel, in place of performing the characteristic conversion processing, so as to convert the photoelectric conversion characteristic of the pixel data read by the target pixel into the reference photoelectric conversion characteristic, and
when the pixel value of the inflection point of the target pixel is the inflection point threshold or less, or when the pixel value of the pixel data read by the target pixel is the pixel threshold or less, then the characteristic conversion unit outputs without modification the pixel value of the target pixel on which the characteristic conversion processing has been executed, so as to convert the photoelectric conversion characteristic of the pixel data read by the target pixel into the reference photoelectric conversion characteristic.

2. The image pickup apparatus according to Claim 1, wherein the characteristic conversion unit converts the pixel data read by the neighbor pixel into the reference photoelectric conversion characteristic using the characteristic conversion processing, and executes the interpolation processing on the pixel data read by the target pixel, by using the pixel data of the neighbor pixel after the conversion.

3. The image pickup apparatus according to Claim 1 or 2, wherein the characteristic conversion unit does not use, among the neighbor pixels, the pixel data read by a pixel, of which pixel value is greater than the pixel threshold and in which the inflection point is greater than the inflection point threshold, for the interpolation processing.

4. The image pickup apparatus according to any of Claims 1 to 3, wherein the characteristic conversion unit specifies the two pixels adjacent to the target pixel in a horizontal direction as the neighbor pixels.

5. The image pickup apparatus according to any of Claims 1 to 3, wherein the characteristic conversion unit specifies two pixels adjacent to the target pixel in a horizontal direction and two pixels adjacent to the target pixel in a vertical direction as the neighbor pixels.

6. The image pickup apparatus according to any of Claims 1 to 5, wherein a plurality of types of pixels for reading pixel data having different color components are cyclically arranged with a predetermined pattern in the imaging element, and the characteristic conversion unit specifies pixels which are the same type as the target pixel and are located near target pixels, as the neighbor pixels.
